Europäisches Patentamt

(19) European Patent Office

Office européen des brevets

(11) Publication number: **0 247 772**
**B1**

(12) **EUROPEAN PATENT SPECIFICATION**

(45) Date of publication of patent specification: **09.05.90**

(51) Int. Cl.⁵: **B 41 J 2/32,** B 41 C 1/055

(21) Application number: **87304394.7**

(22) Date of filing: **18.05.87**

(54) **Thermal printers.**

(30) Priority: **24.05.86 JP 119600/86**

(43) Date of publication of application:
**02.12.87 Bulletin 87/49**

(45) Publication of the grant of the patent:
**09.05.90 Bulletin 90/19**

(84) Designated Contracting States:
**DE FR GB**

(56) References cited:
**DE-A-3 241 768**
**DE-A-3 302 388**
**GB-A-2 143 065**

(73) Proprietor: **SONY CORPORATION**
**7-35 Kitashinagawa 6-Chome Shinagawa-ku**
**Tokyo 141 (JP)**

(72) Inventor: **Maejima, Nobuyuki**
**c/o Toyo Radio Co Ltd 3-9-17 Nishigotanda**
**Shinagawa-ku Toyko (JP)**
Inventor: **Sugawara, Takehiko**
**c/o Toyo Radio Co Ltd 3-9-17 Nishigotanda**
**Shinagawa-ku Toyko (JP)**

(74) Representative: **Pilch, Adam John Michael et al**
**c/o D. Young & Co. 10 Staple Inn**
**London WC1V 7RD (GB)**

Courier Press, Leamington Spa, England.

## Description

This invention relates to thermal printers, and in particular to such printers which are suitable for preparing block copies.

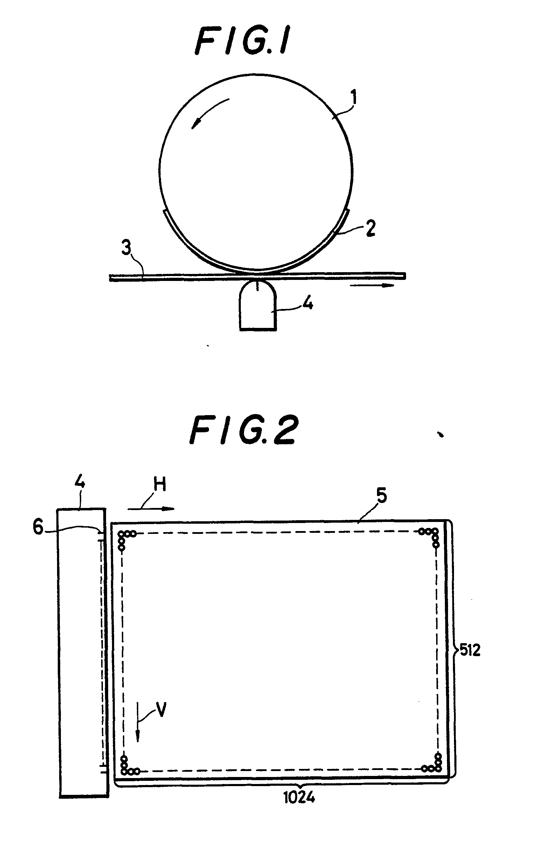

A typical known thermal printer, for example as disclosed in US Patent No. US—A—4 496 955, is shown in Figure 1 of the accompanying drawings. A thermal ink ribbon 3 overlays recording paper 2 wound around a platen 1. The thermal ink ribbon 3 and the recording paper 2 are selectively heated by a thermal head 4 thereby to transfer ink from the ink ribbon 3 to the recording paper 2. In order to print a self-tone image in such a thermal printer, as shown in Figure 2 of the accompanying drawings, an image 5, divided into 1024×512 picture elements, is formed by scanning with the thermal head 4 having 512 heating elements 6 in the horizontal direction indicated by an arrow H. In this case, the thermal head 4 is intermittently moved 1024 times in order to complete an image. The heating elements 6 are selectively energised and heated for periods of time corresponding to the required image densities of the picture elements. The elements 6 are intermittently stopped to print a line extending in the vertical direction indicated by an arrow V (which is hereinafter referred to as a V line). It should be noted that the head 4 in the printer of Figure 1 is fixed, and that the platen 1 is intermittently rotated to perform the required scanning.

In order to reproduce a full-colour image, four ink ribbon sheets such as Y (yellow), M (magenta), C (cyan) and B (black) colour ink ribbon sheets are used, and scanning is performed one colour at a time. In some cases, B (black) colour printing may be omitted.

In the field of full-colour printing, when four block copies, for example Y, M, C and B copies are prepared from a single full-colour image, the full-colour image is separated by a colour scanner to obtain four monochromatic images whose densities respectively correspond to the levels of the Y, M, C and B colour components. These monochromatic images are converted into dot pictures to prepare the corresponding block copies.

The above-described method requires an expensive colour scanner, and the resulting colour separation is cumbersome and time-consuming.

According to the invention there is provided a thermal printer for making printing images of a plurality of block copies corresponding to respective colour separations of a colour image, the thermal printer comprising:

input means for receiving colour video signals corresponding to said colour image to be printed;

thermal head means;

signal processing means connected to said input means for converting said colour video signals into printing colour signals suitable for making block copies for said colour image.

signal generating means for generating printing information data relating to printing plate making for said colour image; and

supplying means operable to supply said printing colour signals to said thermal head means together with related said printing plate making information data.

A preferred embodiment of the invention, to be described in greater detail hereinafter, provides a thermal printer which is capable of easily preparing block copies for respective colours by adding a simple printing plate making mode to an otherwise known printer, without requiring the use of an expensive colour scanner.

In the preferred embodiment, alignment mark data and colour identification mark data (gray scale data or colour bar data) are stored in a memory and can be selectively read out during printing. Preferably, the alignment marks may be automatically printed outside an effective image area at predetermined positions with high precision.

The invention will now be described by way of example with reference to the accompanying drawings, throughout which like parts are referred to by like references, and in which:

Figure 1 is a schematic view showing the basic structure of a known thermal printer;

Figure 2 is a schematic view showing an image printing head and an image area relating to the thermal printer shown in Figure 1;

Figure 3 is a block diagram of a thermal printer according to an embodiment of the present invention;

Figures 4 and 5 are views showing printing patterns printed with alignment marks outside the effective image area;

Figure 6 is a block diagram of the printing control circuit shown in Figure 3; and

Figures 7A and 7B comprise a flow chart for explaining printing under the control of the control circuit shown in Figure 6.

In the embodiment of the invention to be described, Y (yellow), M (magenta), C (cyan) and B (black) block copies are prepared by a thermal printer. The thermal printer has a printing plate making mode in which Y, M, C and B ink ribbon sheets are not used, but instead only a B (black) ink ribbon is used. The same ink ribbon is used for each one of the four colours, and thus four monochromatic images corresponding to the densities of these colours are obtained. The four monochromatic images are converted into four dot pictues to prepare four block copies.

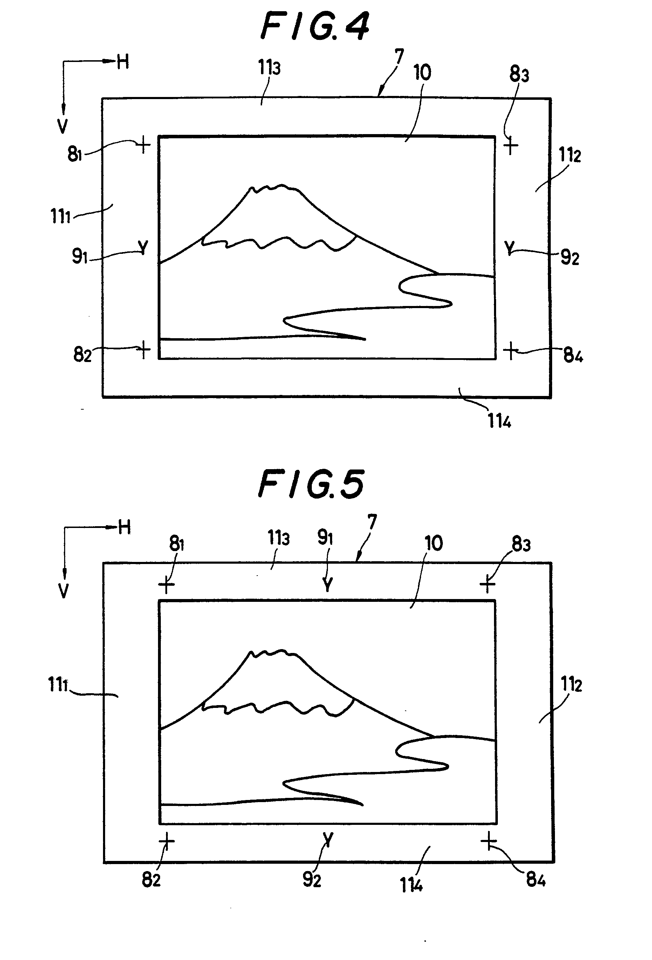

Referring to Figure 4, print positioning marks $8_1$ to $8_4$ and colour information data $9_1$ and $9_2$ are also recorded at predetermined positions of an image area 7. Since the marks $8_1$ to $8_4$ and the information data $9_1$ and $9_2$ are recorded outside the effective image area, the four block copies can be easily positioned at the time of full-colour image printing, and the colour of each block copy can be easily identified.

Referring again to Figure 4, the total image area 7 includes an effective image area 10 used for recording an actual image. Left, right, upper and lower blank portions $11_1$ to $11_4$ each having a predetermined width are formed to define the effective image area 10 in the total image area 7. The number picture elements along a horizontal H direction of the effective image area 10 may be, for example, 784, and the number of picture elements along a vertical V direction may be, for example, 466.

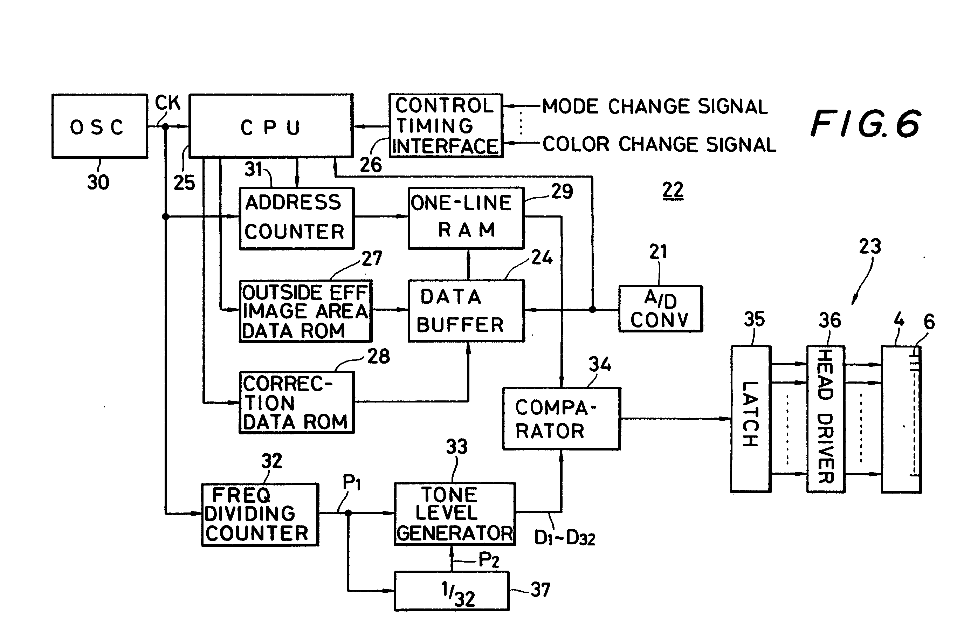

The print positioning marks $8_1$ to $8_4$ are recorded as crosses at upper and lower predetermined positions of the left and right blank portions $11_1$ and $11_2$. The colour information data $9_1$ and $9_2$ shown as "Y" representing yellow are formed substantially at the centres between the upper and lower marks. It should be noted that the colour information data $9_1$ and $9_2$ represent "Y", "M", "C" or "B" according to a given colour to be printed. The marks $8_1$ to $8_4$ and the information data $9_1$ and $9_2$ are formed within the area where 466 picture elements are present along the V direction of the effective image area 10. Therefore, the marks $8_1$ to $8_4$ and the information data $9_1$ to $9_2$ can be recorded by the 466 heating elements 6 (of a thermal head similar to the thermal head 4 shown in Figures 1 and 2) used for recording an image of the effective image area. Alternatively, these marks may be recorded in the upper and lower blank portions $11_3$ and $11_4$, as shown in Figure 5. In this case, the marks $8_1$ to $8_4$ and the information data $9_1$ and $9_2$ can be recorded by those heating elements 6 on either side of those (the total number of heating elements 6 along the H direction being 512) used for recording an image within the effective image area. Referring to Figure 4, the pair of print positioning marks $8_1$ and $8_2$ and the pair of print positioning marks $8_3$ and $8_4$ are respectively recorded in the left and right blank portions $11_1$ and $11_2$, or referring to Figure 5, the pair of print positioning marks $8_1$ and $8_3$ and the pair of print positioning marks $8_2$ and $8_4$ are respectively recorded in the upper and lower blank portions $11_3$ and $11_4$. However, the print positioning mark may alternatively be recorded in each of the left and right blank portions $11_1$ and $11_2$ or each of the upper and lower block portions $11_3$ and $11_4$. Similarly, only one of the colour information data $9_1$ and $9_2$ may be used in the patterns shown in Figure 4 or Figure 5. The pattern of the print positioning marks $8_1$ to $8_4$ and the symbols of the colour information data $9_1$ and $9_2$ may be modified by the use of other shapes and symbols.

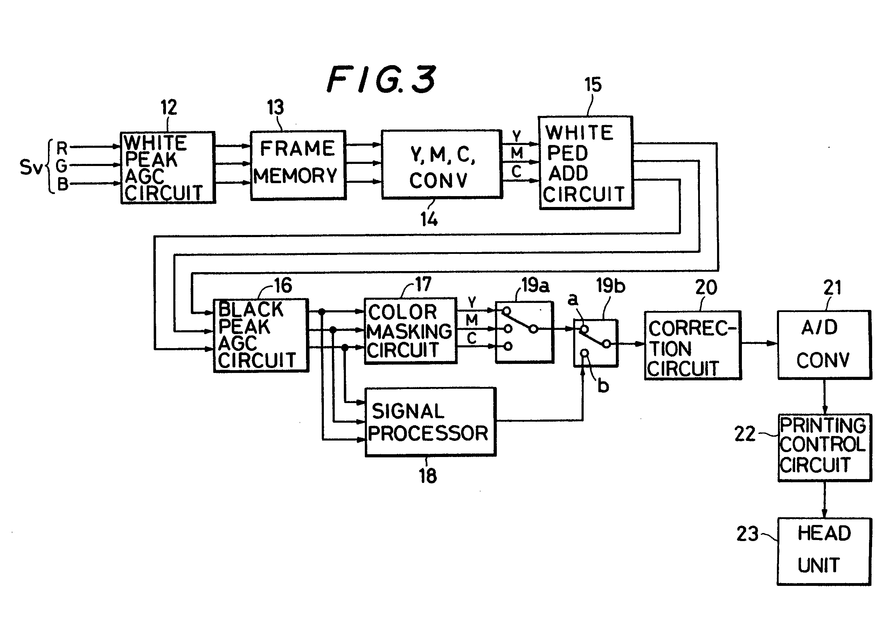

Figure 3 shows a block diagram of an embodiment of a thermal printer having a printing plate making mode. In this case, an image obtained from a video signal is recorded.

Referring to Figure 3, the gain of a video signal Sv is controlled by a white peak automatic gain control (AGC) circuit 12, and a one-frame AGC-controlled video signal is written into a frame memory 13 in the form of digital data signals. A signal read out from the memory 13 is converted into an analog signal. An analog/digital (A/D) converter (not shown) is connected to the input terminal of the memory 13, and a digital/analog (D/A) converter (not shown) is connected to the output terminal of the memory 13. The video signal read out from the memory 13 is converted by a Y, M, C converter 14 from red, green and blue R, G and B signal components to Y, M and C signal components. The converted signal is supplied to a white pedestal addition circuit 15. A white pedestal level pulse is added to the converted signal during the blanking period. The gain of the signal with the pedestal level is controlled by a black peak AGC circuit 16. The AGC-controlled signal from the black peak AGC circuit 16 is supplied to a colour masking circuit 17 and a signal processor 18. A switch 19a is operated to select sequentially the Y, M and C components. In the normal printing mode, a switch 19b is set in the position of a contact $a$. However, in the print plate making mode, the switch 19b is set in the position of a contact $b$. In the normal printing mode, undercolour removal of the Y, M and C signal components is performed in the colour masking circuit 17, and the resultant signal components are supplied to a correction circuit 20 through the switches 19a and 19b. In the print plate making mode, signal processing (for example, density conversion in addition to undercolour removal) for print plate making is performed, and the resultant colour components are supplied to the correction circuit 20 via the signal processor 18 and the switch 19b.

Any necessary correction such as edge correction is performed in the correction circuit 20. The corrected signal is converted into a digital signal by an A/D converter 21. The digital signal from the A/D converter 21 is applied to a printing control circuit 22. The print positioning marks $8_1$ to $8_4$ and the colour information data $9_1$ to $9_2$ are added to the digital signal by the control circuit 22. At the same time, the control circuit 22 also performs predetermined correction operations. An output from the printing control circuit 22 is supplied to a head unit 23 which includes a head driver and the thermal head 4. Information is then recorded by the head unit 23 on recording paper (not shown).

In the nmrmal printing mode, Y, M and C components in the order of Y, M and C are sequentially recorded on single recording paper, to obtain a single full-colour image along the V direction. In the print plate making mode, only black ink is used, and the paper is scanned in the order of Y, M, C and B. Recording progresses in the V line direction, thereby obtaining four monochromatic images which respectively correspond to Y, M, C and B images.

Figure 6 shows a detailed arrangement of the printing control circuit 22. In this embodiment, the energisation time of each heating element 6 of the thermal head 4 is controlled according to the required density of the image. For this purpose, a control signal comprises a pulse-width modulated (PWM) signal having a pulse width corresponding to the density of each picture element.

Referring to Figure 6, image data from the A/D converter 21 (also shown in Figure 3) is supplied to a data buffer 24 associated with a central processing unit (CPU) 25 in the printed control circuit 22. The CPU 25 is operated in response to a mode change signal, a colour change signal, and other timing signals, all of which are applied to a control timing interface 26. The CPU 25 generates address data signals for a read only memory (ROM) 27 and a correction data ROM 28, in response to the image data, the colour change signal and the line. The ROM 27 stores data representing the marks outside the effective image area. The address data signals are supplied to the ROMs 27 and 28. The ROM 27 stores marking data for displaying the print positioning marks $8_1$ to $8_4$ and the colour information data $9_1$ and $9_2$, as shown in Figures 4 and 5. The marking data is read out at predetermined times in response to the address data signals supplied from the CPU 25. The readout marking data is sent to the data buffer 24. The ROM 28 stores correction data such as gamma correction data. The correction data is read out at predetermined times in response to the address data signals supplied from the CPU 25. The readout data is sent to the data buffer 24.

The data buffer 24 receives the image data, the marking data, and the correction data in units of the V lines. The V line data is written from the buffer into a one-line random access memory (RAM) 29, in response to address data supplied from an address counter 31.

An oscillator 30 generates clock pulses (hereinafter referred to as a clock) CK having a predetermined pulse repetition rate or frequency. The clock CK is supplied to the CPU 25, the address counter 31, and a frequency dividing counter 32. The address counter 31 addresses the data in the RAM 29 for serially writing and reading out the single line of data stored therein.

A reference tone level generator 33 generates density reference level data representing one of several tone levels every time a carry pulse P1 is sent from the frequency dividing counter 32 thereto. In this embodiment, the density is represented by one of 32 tone levels D1 to D32. The reference levels D1 to D32 are sequentially generated and supplied to a comparator 34. If the reference level D1 is generated, 466 data signals of the first V line are sequentially read out from the RAM 29 and are sequentially compared with the level D1. If the readout data has a level higher than the level D1, the comparator 34 generates a logic "1" (namely a high level signal). Otherwise, the comparator 34 generates a logic "0" (namely a low level signal). The output from the comparator 34 is stored at the corresponding address of a latch 35. When comparison associated with the level D1 is completed, the contents stored in the latch 35 are supplied to the corresponding heating elements 6 in the thermal head 4 through a head driver 36. The heating elements 6 which receive a logic "1" are energised to perform printing. During printing associated with the reference level D1, the next 466 data signals are sequentially compared with the reference level D2, and the sequential outputs of the comparator 34 are latched by the latch 35 and the applied to the thermal head 4 through the head driver 36, thereby energising the heating elements 6 which receive a logic "1". Similarly, the heating elements 6 are energised when the result of the comparison, respectively, with the reference levels D2 to D32 represents a logic "1". However, when the comparison result represents a logic "0", the corresponding heating element 6 is de-energised. In this case, the energisation pulse for each of the heating elements 6 comprises a PWM pulse having a pulse width corresponding to the density of the picture element pixel corresponding to that heating element 6.

When the printing of one V line is completed, the tone level generator 33 is reset in response to a carry pulse P2 from a counter 37 which receives the pulse P1 and effects a 1/32 frequency-dividing.

When the first V line has been completely printed, a platen or drum similar to the platen 1 in Figure 1 is rotated by one pitch of the picture element and is then stopped. Data relating to the second V line is converted into the PWM signals, and information represented by the PWM signals is printed in the same manner as described above. When printing has been completed, the drum is rotated by one pitch of the picture elements. The above operation is then repeated to complete scanning along the H direction, thereby printing the entire image.

The print positioning marks $8_1$ to $8_4$ and the colour information data $9_1$ and $9_2$ are recorded as data representing the marks outside the effective image area. However, the data representing the marks outside the effective image area may include other necessary print plate making data, such as gray scale data and colour bar data. The gray scale data and the colour bar data may be stored in the ROM 27 and can be selectively read out and printed in the blank portions $11_1$ to $11_4$.

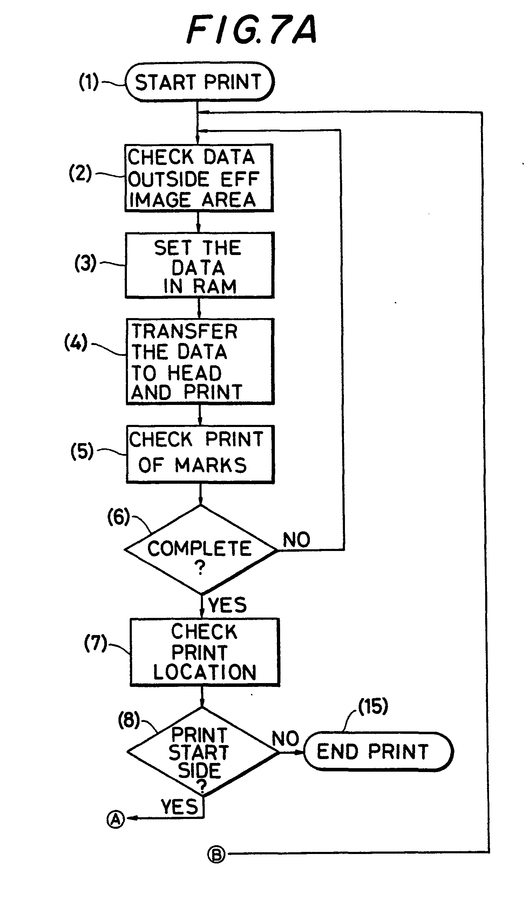

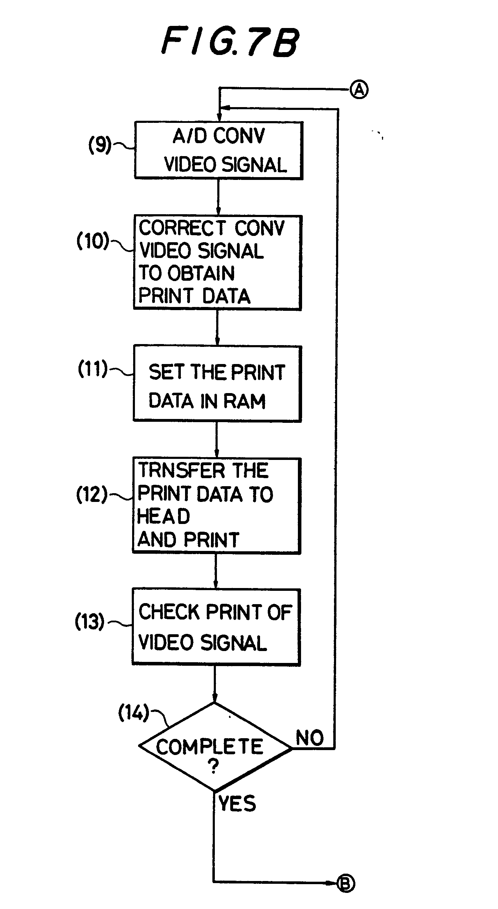

Figures 7A and 7B constitute a flow chart for executing printing by using the recording pattern of Figure 4 in the block-making mode.

Printing is started in a step (1), and data representing the marks outside the effective image area is checked in a step (2). In particular, the CPU 25 checks in the step (2) that the colour information data $9_1$ and $9_2$ have been properly received. In a step (3), the data representing the marks outside the effective image area is set or written into the RAM 29 for printing the predetermined marks or the like. In a step (4), the data is read out from the RAM 29 and is transferred to the head unit 23 to print the data. The CPU 25 checks in a step (5) that the predetermined marks have been properly printed. The CPU 25 then determines in a step (6) whether printing of the predetermined marks has been completed. If not, the flow returns to the step (2) and printing continues. If printing has been completed according to the step (6), the flow advances to a step (7). In the step (7), the currently printed marks are checked for location on the printing start or end side, namely whether they are in the blank portion $11_1$ or $11_2$ in Figure 4. The CPU 25 determines in a step (8) whether the marks are printed on the printing start side, namely in the blank portion 11.

If so, in other words, if the marks $8_1$, $8_2$ and the information data $9_1$ are printed in the blank portion $11_1$, the flow advances to a step (9) to print the effective image 10.

In the step (9), the video signal Sv is A/D converted. In a step (10), correction data is read out from the ROM 28 and added to the digital video signal to obtain printing data. The printing data is set or written into the RAM 29 in a step (11). In a step (12), the data is read out from the RAM 29 and is transferred to the head unit 23, thereby printing the image data.

The CPU 25 checks printing of the video signal in a step (13), and determines in a step (14) whether printing has been completed. If printing has not been completed, the flow returns to the step (9). However, if printing has been completed, the flow returns to the step (2).

In the step (2) and the subsequent steps (3), (4),...(7), printing of the marks $8_3$, $8_4$ and the information $9_2$ is performed in the blank portion $11_2$. If in the step (8), it is determined that the marks are not on the printing start side, the CPU 25 determines that the marks are printed on the printing end side (namely in the blank portion $11_2$). In this case, the flow advances to a step (15), and printing is ended.

Referring to Figures 7A and 7B, in the normal printing mode, the flow jumps from the step (1) to the step (9), and the operations in the steps (9) to (14) are then performed. If printing has been completed according to the step (14), printing is ended.

When printing is performed according to the recording pattern in Figure 5 in the block-making mode, data representing the marks (namely the marks $8_1$ to $8_4$ and the information data $9_1$ and $9_2$) outside the effective image area is dealt with as being equivalent to the image data. In this case, the operations in the steps (9) to (14), in other words the operations in the normal printing mode, are performed. However, it should be noted that the data set into the RAM 29 includes image data and also the data representing the marks outside the effective image area.

According to the preferred embodiment of the present invention as described above, Y, C, M and B block copies can be easily prepared. In addition, the print positioning marks $8_1$ to $8_4$, the colour information data $9_1$ and $9_4$ or the like of each block copy can be automatically printed at predetermined positions of the image area with high precision.

## Claims

1. A thermal printer for making printing images of a plurality of block copies corresponding to respective colour separations of a colour image, the thermal printer comprising:
   input means for receiving colour video signals (Sv) corresponding to said colour image to be printed;
   thermal head means (23);
   signal processing means (12 to 16) connected to said input means for converting said colour video signals into printing colour signals suitable for making block copies for said colour image;
   signal generating means (27) for generating printing information data relating to printing plate making for said colour image; and
   supplying means (22) operable to supply said printing colour signals to said thermal head means (23) together with related said printing plate making information data.

2. A thermal printer according to claim 1, wherein said printing plate making information data includes printing colour information data ($9_1$, $9_2$) and print positioning marks ($8_1$ to $8_4$).

3. A thermal printer according to claim 1 or claim 2, wherein said printing plate making information data is supplied to said thermal head means (23) at times when said printing colour signals are not being supplied thereto.

4. A thermal printer according to claim 1, claim 2 or claim 3, wherein said signal processing means comprises means (12 to 16) for deriving colour component signals from said video signals corresponding to a yellow (Y), a magenta (M) or a cyan (C) component adjusted for representations of white and black levels, and said supplying means comprises printing control circuit means (22) operative to supply printing colour signals corresponding to said colour component signals to said thermal head means (23).

5. A thermal printer according to claim 4, wherein said thermal head means (23) includes a plurality of individual heating elements (6) and said printing control circuit means (22) comprises data buffer means (24) for storing said colour component signals, memory means (29) for storing a single line of data corresponding to said printing colour signals, and means (34) for selectively supplying said stored line of data to said heating elements (6) in accordance with said colour component signals.

6. A thermal printer according to claim 5, including tone level generator means (33) for successively generating a plurality of tone signals (D1 to D32) corresponding to variations in density of a printed image, comparator means (34) connected to said tone level generator means (33) and to said memory means (29) for supplying a printing colour signal to each of said heating elements (6) which is a pulse-width modulated function of a predetermined density of a colour image produced by the heating elements (6).

7. A thermal printer according to claim 4, claim 5 or claim 6, wherein said printing control circuit means (22) includes a central processing unit (25) and means (31) under control of said central processing unit (25) for reading out of and writing into said memory means (29) in synchronism with cycles of operation of said thermal printer.

## Patentansprüche

1. Wärmedrucker zum Herstellen von Druckbildern aus einer Vielzahl von Blockkopien, die betreffenden Farb-Teilbildern eines Farbbildes entsprechen, welcher Farbdrucker umfaßt:

Eingangsklemmen zum Aufnehmen von Farb-Videosignalen (Sv), die dem zu druckenden Farbbild entsprechen,

einen Wärmekopf (23),

mit den Eingangsklemmen verbundene Signalverarbeitungsmittel (12 bis 16) zum Umsetzen der Farb-Videosignale in Farb-Drucksignale, die zum Herstellen von Blockkopien für das Farbbild geeignet sind,

ein Signalerzeugungsmittel (27) zum Erzeugen von Druck-Informationsdaten, die sich auf eine Druckplatten-Herstellung für das Farbbild beziehen, und

ein Zuführungsmittel (22), das betreibbar ist, um dem Wärmekopf (23) die Farb-Drucksignale zusammen mit den sich darauf beziehenden Informationsdaten für die Druckplatten-Herstellung zuzuführen.

2. Wärmedrucker nach Anspruch 1, bei dem die Informationsdaten für die Druckplatten-Herstellung Farbdruck-Informationsdaten (9₁, 9₂) und Druckpositionierungsmarken (8₁ bis 8₄) enthalten.

3. Wärmedrucker nach Anspruch 1 oder 2, bei dem die Informationsdaten für die Druckplatten-Herstellung dem Wärmekopf (23) zu Zeitpunkten zugeführt werden, zu denen diesem die Farb-Drucksignale nicht zugeführt werden.

4. Wärmedrucker nach Anspruch 1, 2 oder 3, bei dem die Signalverarbeitungsmittel Mittel (12 bis 16) zum Gewinnen von Farbkomponentensignalen entsprechend einer Gelb (Y)-, einer Magenta (M)- oder einer Zyan (C)-Komponente aus den Videosignalen umfassen, welche Komponenten für Darstellungen von Weiß- und Schwarzpegeln abgestimmt sind, und das Zuführungsmittel eine Drucksteuerschaltung (22) umfaßt, die betreibbar ist, um Farb-Drucksignale, welche den Farbkomponentensignalen enentspechen, dem Wärmekopf (23) zuzuführen.

5. Wärmedrucker nach Anspruch 4, bei dem der Wärmekopf (23) eine Veilzahl von individuellen Heizelementen (6) enthält und die Drucksteuerschaltung (22) ein Pufferspeichermittel (24) zum Speichern der Farbkomponentensignale, ein Speichermittel (29) zum Speichern einer einzelnen Reihe von Daten, die den Farbkomponentensignalen entsprechen, und ein Mittel (34) zum selektiven Zuführen der gespeicherten Reihe von Daten zu den Heizelementen (6) in Übereinstimmung mit den Farbkomponentensignalen umfaßt.

6. Wärmedrucker nach Anspruch 5, der ein Farbtonpegel-Erzeugungsmittel (33) zum aufeinanderfolgenden Erzeugen einer Vielzahl von Farbton-Signalen (D1 bis D32), die Änderungen in der Dichte eines gedruckten Bildes entsprechen, und ein Vergleichsmittel (34) enthält, das mit dem Farbtonpegel-Erzeugungsmittel (33) und dem Speichermittel (29) zum Zuführen eines Farb-Drucksignals zu jedem der Heizelemente (6) verbunden ist, welches Signal eine impulsbreitenmodulierte Funktion einer vorbestimmten Dichte eines Farbbildes ist, das durch die Heizelemente (6) erzeugt wird.

7. Wärmedrucker nach Anspruch 4, 5 oder 6, bei dem die Drucksteuerschaltung (22) eine zentrale Verarbeitungseinheit (25) und ein von der zentralen Verarbeitungseinheit (25) gesteuertes Mittel (31) zum Auslesen aus dem und Einschreiben in das Speichermittel (29) in Synchronismus mit Operationszyklen des Wärmedruckers enthält.

**Revendications**

1. Une imprimante thermique pour former des images imprimantes d'un ensemble de copies pour des formes d'impression correspondant à des images monochromes respectives d'une image en couleur, l'imprimante thermique comprenant:

des moyens d'entrée destinées à recevoir des signaux vidéo en couleurs (Sv) correspondant à l'image en couleurs à imprimer;

une structure de tête d'impression (23);

des moyens de traitement de signal (12 à 16) connectés aux moyens d'entrée pour conventir les signaux vidéo en couleurs de façon à donner des signaux en couleurs d'impression qui conviennent pour former des copies pour des formes d'impression pour l'image en couleurs;

des moyens de génération de signal (27) pour générer des données d'information d'impression concernant la fabrication de formes d'impression pour l'image en couleurs; et

des moyens d'application de signaux (22) qui appliquent les signaux en couleurs d'impression à la structure de tête thermique (23), en compagnie de données d'information de fabrication de formes d'impression associées.

2. Une imprimante thermique selon la revendication 1, dans laquelle les données d'information de fabrication de formes d'impression comprennent des données d'information de couleur (9₁, 9₂) et des marques de cadrage d'impression (8₁ à 8₄).

3. Une imprimante thermique selon la revendication 1 ou la revendication 2, dans laquelle les données d'information de fabrication de formes d'impression sont appliquées à la structure de tête thermique (23) à des instants auxquels les signaux en couleurs d'impression ne lui sont pas appliqués.

4. Une imprimante thermique selon la revendication 1, la revendication 2 ou la revendication 3, dans laquelle les moyens de traitement de signal comprennent des moyens (12 à 16) pour élaborer des signaux de composantes de couleurs à partir des signaux vidéo correspondant à une composante jaune (Y), une composante magenta (M) ou une composante cyan (C), ajustés en fonction de représentations de niveaux de blanc et de noir, et les moyens d'application de signaux comprennent un circuit de commande d'impression (22) qui applique à la structure de tête thermique (23) des signaux en couleurs d'impression correspondant aux signaux de composantes de couleurs précités.

5. Une imprimante thermique selon la revendication 4, dans laquelle la structure de tête thermique (23) comprend un ensemble d'éléments chauffants individuels (6), et le circuit de commande d'impression (22) comprend une mémoire tampon de données (24) destinée à enregistrer les signaux de composantes de couleurs, une mémoire (29) pour enregistrer une seule ligne de données correspondant aux signaux en couleurs d'impression, et des moyens (34) pour appliquer sélectivement la ligne de données enregistrée aux éléments chauffants (6), conformément aux signaux de composantes de couleurs.

6. Une imprimante thermique selon la revendication 5, comprenant un générateur de niveaux de teinte (33) pour produire successivement un ensemble de signaux de teinte (D1 à D32) correspondant à des variations de densité d'une image imprimée, et des moyens comparateurs (34) connectés au générateur de niveaux de teinte (33) et à la mémoire (29), pour appliquer à chacun des éléments chauffants (6) un signal en couleurs d'impression qui est modulé en largeur d'impulsions conformément à une fonction d'une densité prédéterminée d'une image en couleurs qui est produite par les éléments chauffants (6).

7. Une imprimante thermique selon la revendication 4, la revendication 5 ou la revendication 6, dans laquelle le circuit de commande d'impression (22) comprend une unité centrale (25) et des moyens (31), sous la commande de l'unité centrale (25) qui sont destinés à lire et à écrire dans la mémoire (29), en synchronisme avec des cycles de fonctionnement de l'imprimante thermique.

# FIG.1

# FIG.2

1

# FIG.3

EP 0 247 772 B1

## FIG.4

## FIG.5

# FIG.6

MODE CHANGE SIGNAL

COLOR CHANGE SIGNAL

OSC 30

CK

CPU 25

CONTROL TIMING INTERFACE 26

ONE-LINE RAM 29

DATA BUFFER 24

A/D CONV 21

ADDRESS COUNTER 31

OUTSIDE EFF IMAGE AREA DATA ROM 27

CORREC-TION DATA ROM 28

FREQ DIVIDING COUNTER 32

TONE LEVEL GENERATOR 33

1/32 37

COMPA-RATOR 34

LATCH 35

HEAD DRIVER 36

22

23

P₁

P₂

D₁~D₃₂

4

6

# FIG.7A

(1) — START PRINT

(2) — CHECK DATA OUTSIDE EFF IMAGE AREA

(3) — SET THE DATA IN RAM

(4) — TRANSFER THE DATA TO HEAD AND PRINT

(5) — CHECK PRINT OF MARKS

(6) — COMPLETE ? NO

YES

(7) — CHECK PRINT LOCATION

(8) — PRINT START SIDE ? NO (15) END PRINT

YES

Ⓐ

Ⓑ

# FIG.7B

Ⓐ

(9) A/D CONV
VIDEO SIGNAL

(10) CORRECT CONV
VIDEO SIGNAL
TO OBTAIN
PRINT DATA

(11) SET THE PRINT
DATA IN RAM

(12) TRNSFER THE
PRINT DATA TO
HEAD
AND PRINT

(13) CHECK PRINT OF
VIDEO SIGNAL

(14) COMPLETE
? — NO

YES

Ⓑ